# EUROPEAN PATENT SPECIFICATION

(11) **EP 3 574 482 B1**
(45) Date of publication and mention of the grant of the patent: **28.06.2023**
(21) Application number: 17894569.7
(22) Date of filing: 22.12.2017
(51) Int. Cl.: H04L 9/40, H04L 9/08, G07C 13/00, H04L 9/14, H04L 9/32

(54) **VOTING SYSTEM AND METHOD**
ABSTIMMUNGSSYSTEME UND -VERFAHREN
SYSTÈME ET PROCÉDÉ DE VOTE

(30) Priority: 30.01.2017 AU 2017900257
(43) Date of publication of application: 04.12.2019
(73) Proprietor: Exo One Pty Ltd, Lavender Bay, New South Wales 2060 (AU)
(72) Inventor: KAYE, Max, Lavender Bay, New South Wales 2060 (AU)
(74) Representative: Abel & Imray LLP
(86) International application number: PCT/AU2017/051446
(87) International publication number: WO 2018/136991

(56) References cited:
- WO-A2-01/73694
- WO-A2-02/077929
- WO-A2-2005/093671
- US-A1- 2006 229 991
- US-A1- 2006 229 991
- US-A1- 2008 110 985
- US-A1- 2008 110 985
- US-A1- 2012 095 811
- US-A1- 2012 095 811
- THOMAS HAINES ET AL: "VOTOR", 20160201; 1077952576 - 1077952576, 1 February 2016 (2016-02-01), pages 1-13, XP058077879, DOI: 10.1145/2843043.2843362 ISBN: 978-1-4503-4042-7
- Pavel Tarasov ET AL: "Internet Voting Using Zcash", IACR Cryptology ePrint Archive, 1 January 2017 (2017-01-01), XP055569439, Retrieved from the Internet: URL:https://eprint.iacr.org/2017/585.pdf [retrieved on 2019-03-14]

## Description

### Cross-Reference to Related Applications

The present application claims priority from Australian Provisional Patent Application No 2017900257 filed on 30 January 2017.

### Technical Field

This disclosure relates to voting systems and methods for collecting votes from multiple voters.

### Background

The majority of elections are still held in paper form. This is despite steep advances in computer technology, which makes computer devices available for every voter. Electronic voting would simplify the voting process and accelerate the counting. Additionally, the costs for counting staff would be reduced. There are electronic voting booths but they are often subject of criticism and alleged security breaches. Therefore, there is a need for a more secure and more transparent voting system.

THOMAS HAINES ET AL: "VOTOR", 20160201, 1 February 2016, pages 1-3 discloses how to use several cryptographic primitives to construct a system, called VOTOR- "Voting Over TOR" (or any other anonymous channel). Specifically, the system leverages the power of Linkable Ring Signature (LRS) over commodity internet anonymous channels (such as "the onion router" TOR as one of many options), to achieve multiple significant properties of interest in remote voting. US 2006/0229991 A1 discloses an electronic voting system, and in particular an electronic voting system that utilizes an identity based encryption scheme to provide a paper audit trail. US 2008/0110985 A1 discloses a method that involves creating a private key and a public key cryptographic key pair, generating a unique and random identifier for a voter's vote and accepting an election vote from said voter. WO 02/077929 A2 discloses a mathematical construct which provides a cryptographic protocol to (verifiably shuffle) a sequence of (k) modular integers, and its application to secure, universally verifiable, multi-authority election schemes. WO 01/73694 A2 discloses a cryptographic process that permits one to verifiably shuffle a series of input data elements (e.g. public keys in discrete log form or ElGamal encrypted ballot data). US 2012/0095811 A1 discloses is an electronic voting system in which a polling administration unit, upon receiving encoded vote content data encoded by a temporary key from a voting unit, generates a reference value capable of identifying sameness of the encoded vote content data and sends it to a voter list administration unit. Tarasov: "Internet Voting Using Zcash" IACR Cryptology ePrint Archive, 1 January 2017, discloses a protocol that offers anonymity of voter transactions, while keeping the transactions private, and the election transparent and secure.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Summary

The invention is defined by the appended claims. Advantageous embodiments thereof are defined in the respective dependent claims.

There is disclosed a system for anonymising votes cast online between untrusted peers such that no peer is able to determine which particular permanent entity (IE the voter) cast which vote via the use of cryptographic algorithms. Untrusted means that the peer can verified using data from other peers and independent from data provided by the peer to be verified.

There is provided a voting system for collecting votes from multiple voters. The voters are associated with multiple identity public keys that each identify one voter. The voting system comprises:
multiple node computer devices to collect the votes and to combine the votes into a vote container and to store the vote container including the votes on a public data store, characterised in that
there is an association between voting public keys (311) and the identity public keys via corresponding signatures,
each of the multiple node computer devices is configured to communicate the voting public keys between the node computer devices by using cryptography to remove the association between the voting public keys and the identity public keys to create a list of anonymised voting public keys,
each of the multiple node computer devices is further configured, after the association between the voting public keys and the identity public keys is removed, to communicate votes, authenticated by the anonymised voting public keys, by using cryptography to remove an association between the votes and the voting public keys to create anonymised votes and combine the anonymised votes into the vote container.

It is a technical advantage that the two-step process of anonymising the public keys and then anonymising the votes protects against an active attacker. This means an active attacker, which could be one of the node computer devices, is not able to discern the identity of a voter related to a particular vote. Further, if there is an attacker that attempts to do so, the other nodes would detect the attacker's presence and, through deduction, determine the node and relevant public key of the attacker. This means they can subsequently avoid the attacker.

Each of the multiple node computer devices may be further configured to store an identity key pair including the identity public key and an identity private key and to sign the voting public key using the identity private key of that node computer device.

The voting public keys may be ephemeral.

Using cryptography to remove the association between the voting public keys and the identity public keys may comprise encrypting multiple voting public keys according to a random order and sending the randomly sorted voting public keys to the other node computer devices.

Using cryptography to remove the association between the voting public keys and the identity public keys may comprise receiving a first data packet that is encrypted multiple times with different voting public keys, decrypting the first data packet once and sending the decrypted first data packet to a next node computing device.

Using cryptography to remove the association between the voting public keys and the identity public keys may further comprise:
receiving multiple data packets that are encrypted multiple times with different voting public keys;
decrypting the multiple data packets once;
randomly ordering the multiple data packets; and
sending the decrypted randomly ordered multiple data packets to a next node computing device.

Using cryptography to remove the association between the voting public keys and the identity public keys may further comprise, before the step of randomly ordering the multiple data packets, creating a new data packet, encrypting the new data packet multiple times with different voting public keys and adding the encrypted new data packet to the multiple data packets.

Using cryptography to remove the association between the voting public keys and the identity public keys may further comprise:
creating a random order of node computer devices;
encrypting a data packet multiple times using voting public keys in the order of the node computer devices; and
sending the encrypted data packet together with an indication of the order of node computer devices to a next node computer device as indicated by the order of node computer devices.

Using cryptography to remove the association between the voting public keys and the identity public keys may further comprise:
creating multiple random orders of node computer devices by creating a random order for each of the multiple node computer devices such that the random order ends at that node computer device;
for each of the multiple random orders encrypting a data packet multiple times using voting public keys in that order of the node computer devices; and
sending each of the encrypted data packets together with an indication of that order of node computer devices to a next node computer device as indicated by that order of node computer devices.

Storing the vote container on a public data store may comprise storing the vote container on a distributed ledger of transactions.

The multiple node computer devices may be further configured to store the list of anonymised voting public keys on a distributed ledger.

The multiple node computer devices may be further configured to determine whether their associated public key is included in the list of anonymised voting public keys and upon determining that their associated public key is included, calculating a cryptographic signature of the list of anonymised voting public keys.

Each of the votes may include a vote identifier and the multiple node computer devices may be further configured to determine whether their vote identifier is included in the collected votes and upon determining that their vote identifier is included, calculating a cryptographic signature of the collected votes.

The multiple node computer devices may be further configured to monitor communications and in response to detecting an anomaly, entering a blame game stage to identify a non-compliant node computer device.

The multiple node computer devices may be further configured to remove the association between the voting public keys and the identity public keys selectively by using a first protocol according or by using a second protocol.

The multiple node computer devices may be further configured to select between the first protocol and the second protocol based on the number of node computer devices.

There is provided a method comprising: collecting votes from multiple voters. The voters are associated with multiple identity public keys that each identify one voter. The method further comprises:
generating voting public keys, wherein there is an association between the voting public keys and the identity public keys via corresponding signatures,
communicating voting public keys between multiple node computer devices by using cryptography to remove the association between the voting public keys and the identity public keys to create a list of anonymised voting public keys,
after the association between the voting public keys and the identity public keys is removed, communicating votes, authenticated by the anonymised voting public keys, by using cryptography to remove an association between the votes and the voting public keys to create anonymised votes; and
combining the anonymised votes into a vote container.

Optional features described of any aspect of method, computer readable medium or computer system, where appropriate, similarly apply to the other aspects also described here.

### Brief Description of Drawings

An example will now be described with reference to:
Fig. 1 illustrates a voting system.
Fig. 2 illustrates an association of a voter with an identity public key.
Fig. 3 uses a first example of removing the association between a voting public key and the identity public key.
Fig. 4 uses a second example of removing the association between a voting public key and the identity public key.
Fig. 5 illustrates a node computing device in more detail.
Fig. 6 illustrates a method for collecting votes as performed by the node in Fig. 5.

### Description of Embodiments

This disclosure provides a two-phase, multi-step process to deliver fully anonymized votes from a population of voters. It is a process by which 3 or more distinct voters can combine their votes to produce an outcome where each vote cannot be tied to an identity, and any attempt to compromise either phase of the process reveals no information about who attempted to vote what. It also allows for a `blame game' to be played, revealing which actor attempted to compromise the process in the case that either phase does not resolve.

This disclosure further provides an algorithm that can efficiently produce anonymized votes. Here, 'efficiently' means `generating a vote with comparable computational effort to a plaintext vote signed by a single identity (either RSA or ECC keypair)'. Particularly, the proposed solution is able to produce anonymised votes with only twice the verification burden (per vote) of a single, anonymous vote. No precomputation is required, and the algorithm is also simple enough for most people to understand, which increases transparency.

Particularly, a verifier is able to take a whitelist of all voters' identities, a list of phase 1 actions (anonymization of identity), and list of phase 2 actions (the anonymized votes), and from that can verify:
- Which voters participated in phase 1
- How many voters went on to participate in phase 2
- The result of an election
- That no voters voted twice
Without being able to tie any one voter to their vote (a property known as secret ballot) even when under active surveillance.

Additionally, the disclosed solution does not involve any special authorities, which makes it (with the exclusion of users' devices) the basis for a secure voting system, as there is no central point of failure in this solution.

Additionally, because the whitelist of identities is public but never connected to a vote, they can safely be publicly associated with a UUID corresponding uniquely to an elector. This ensures that multiple independent audits (carried out in private where necessary) can guarantee the integrity of the list of electors.

It is noted that throughout this disclosure, when reference is made to a private key, public key, signature or other cryptographic method, that is may be based on elliptic curve cryptography, homomorphic encryption, RSA or other cryptographic technologies.

### Voting system

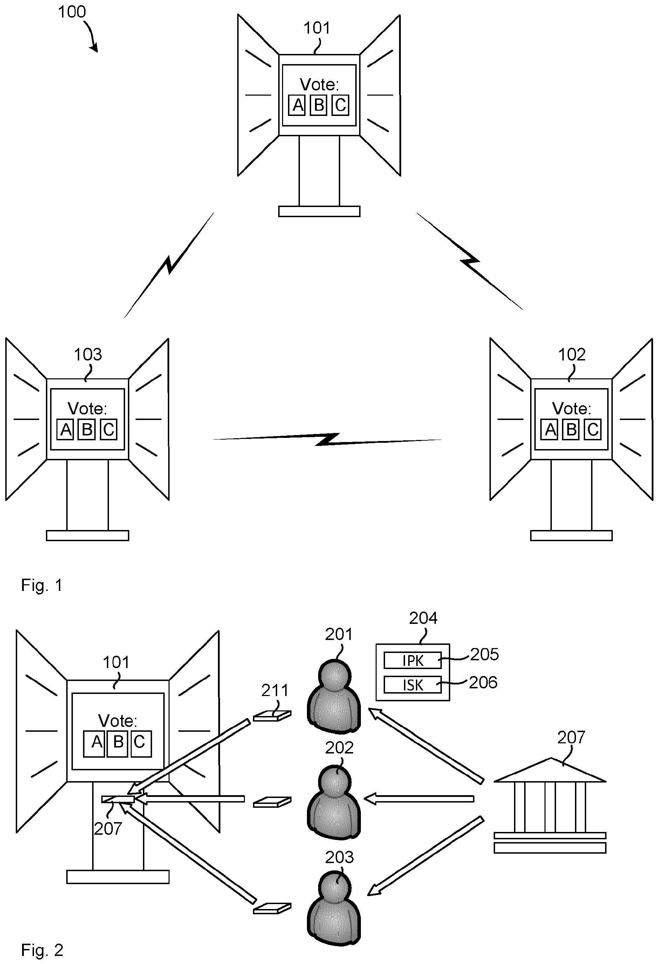

Fig. 1 illustrates a voting system 100 for collecting votes from multiple voters (not shown). The voters are associated with multiple identity public keys that each identify one voter. Voting system 100 comprises first node computer device 101, second node computer device 102 and third node computer device 103. Generally, the node computer devices my simply be referred to as nodes. The nodes may be voting booths as shown in Fig. 1, voters' own mobile devices, such as smartphones or computers using web application or other technologies. Three nodes are shown in Fig. 1 for clarity but more nodes, such as ten nodes, may be present in the system. Nodes 101, 102 and 103 collect the votes, combine the votes into a vote container and store the vote container including the votes on a public data store as will be described in detail below.

As mentioned above, the voters are associated with identity public keys that each identify one voter. Fig. 2 illustrates this in more detail using the example of three voters 201, 202 and 203 using voting booth 101. Voter 201, for example, generates a key pair 204 including an identity public key 205 and an identity secret key 206. The terms secret key and private key are used herein interchangeably. The aim here is to enable other parties to authenticate messages from voter 201. That is, other parties should be able to check that a message received from voter 201 was not in fact transmitted by an attacker. For that aim, a central trusted authority 207 or other public key infrastructure (KPI) can be used. This trusted authority 207 can be a government body or private company authorised by the government. Trusted authority 207 can provide a public key to all parties in a secure way. Trusted authority 207 can then use its secret key to sign voter's 201 public key 205. When voter 201 broadcasts public key 205, all receivers can verify, using the public key from trusted authority 207, that the public key is valid. In fact, voter 201 can sign any message or payload data using the secret key 206 and all receivers can verify that the message or payload came from voter 201 and nobody else because nobody else has access to the secret key 206. In one example, each voter has exactly one key pair 204 that is signed by trusted authority 207.

Voter 201 could now generate a vote and sign the vote with public key 205. This would guarantee that the vote has been generated by voter 201 and by checking all votes, it can be verified that each voter 201, or more precisely each person with access to a secret key corresponding to a signed public key has voted once. The problem, however, would be that the vote is not anonymous, which is important in most elections or ballots. The following disclosure provides a solution based on a voting public key where the association between the voting public key and the identity public key 206 is removed while still allowing for transparent verification of all votes by the public.

In one example, the key pair 204 is stored on a data store, such as a memory stick. In another example, the key pair 204 is stored on a smart card. The smart card may also comprise an integrated cryptographic chip, such that a reader can send the data to the card, the card encrypts the data or signs the data and sends the encrypted data or the signature back to the reader. This way, the keys are not accessible to the reader.

In the example of Fig. 2, the voting booth 101 has a slot 207 as a card reader. Voter 201 inserts the smart card 211 into slot 207 of the voting booth 101 to enable the voting booth 101 to access identity public key 205 and to request encryption and signatures based on the identity secret key 206. Once voter 201 initiates the voting process with node 101, node 101 generates a new pair of voting public key and voting secret key. In other examples, the smart card or another device generates the pair. The voting public key and voting secret key may be generated the same way or in a different way to identity key pair 204. It is noted that the terms voting public key and identity public key are merely used to indicate the function of these keys but do not indicate a technical difference between these two keys. The actual value of the keys, however, is different.

As voters interact with the three nodes 101, 102 and 103 there is a voting public key available at each node. Nodes 101, 102 and 103 now communicate the voting public keys between them. In particular, nodes 101, 102 103 calculate signatures of their voting public keys using their identity secret keys. Nodes 101, 102 and 103 further encrypt the data using the identity public keys of the other voters. The nodes continue this use of cryptography as described below to remove the association between the voting public keys and the identity public keys. The nodes 101, 102 and 103 thereby create a list of anonymised voting public keys. It is noted that throughout this disclosure, unless stated otherwise, a list is not meant to be an ordered list or a data structure with a relationship between neighbouring list items. More broadly, a list is a collection of items and could, in programmers' terms, equally be referred to as a set, bag, collection, hash table, heap, stack or other terms.

Removing the association between the voting public keys and the identity public keys means that it is not possible to determine the identity of a holder of an identity secret key from the voting public key that was generated for that holder. The voting public keys are communicated in a way that ensures that each voting public key that is communicated belongs to a verified voter, that is, a voter with a valid identity secret key. However, it is not possible to identify that voter. The result is a list of public keys but there is no further information that could identify the identity secret key. This can be achieved by the nodes randomising an order of encrypted voting public keys such that any receiving node cannot determine the origin of each encrypted voting public key.

After the association between the voting public keys and the identity public keys is removed the nodes 101, 102 and 103 communicate votes, which are now authenticated by the anonymised voting public keys. The nodes 101, 102 and 103 again use cryptography to remove the association between the votes and the voting public keys. This way, the nodes 101, 102 and 103 create anonymised votes and combine the anonymised votes into the vote container.

It is noted that a 'vote' herein refers to any data structure that can be indicative of a vote. For example, a vote could be a string comprising the selected option, such as "A", "B" or "C". In some examples, the vote is more complex and may be in JSON or XML format. The vote may also include a vote identifier, such as a random number generated by nodes 101, 102 and 103. The vote identifier may be a 128 bit number. This way, each node 101, 102 and 103 can store the vote identifier temporarily and analyse the complete set of votes in the vote container and verify that the vote with their chosen stored vote identifier is included in the vote container. Storing a vote as bytes on a data store is referred to as 'serialisation'.

### Removing associations

As explained above, one aim is to provide a voting system where the votes can be authenticated but the origin of each node is hidden. The solution involves the removal of associations of keys/votes to the identity public keys of the participants. In general terms, the removal is achieved by communicating the keys/votes between nodes using cryptography to remove the associations. In particular, the nodes generate public keys and communicate these keys to remove the association to the respective identity public key. The generated public keys may be ephemeral, which means that they are used for only a single vote and then disregarded.

In some examples, there is a software application that is installed on each node. This software application is identical for each node or at least, follows the same protocol for each node. In some examples, the application may be implemented in different languages or for different platforms but offers the same functionality in the sense that the communication between the nodes using cryptography to remove the association is compatible between the nodes. The proposed methods may also be referred to as `peer to peer' since the nodes are self-reliant without the need for a central authority other than for providing the identity keys.

The following description explains two examples of removing the association between keys and between votes and keys. It is to be understood, however, that other ways and variants of the provided examples are equally applicable.

### Shuffle Method: Oblivious Shuffle

In a first example, the nodes perform the following algorithm comprising two rounds, where the first round is for creating the list of anonymised public keys and the second round is for creating the anonymised votes. In this example, the identity public key is referred to as the main public key (MPK). Correspondingly, the identity secret key is referred to as the main secret key (MSK).

It is noted that for simplicity of explanation, reference is made to a 'voter' such as "selecting voters". It is to be understood that this refers to a selection that is performed by the node devices. Each 'voter' may be represented by a voter identifier or directly by the main public key (MPK). That is, selecting a voter in this case means selecting one of the available MPKs.

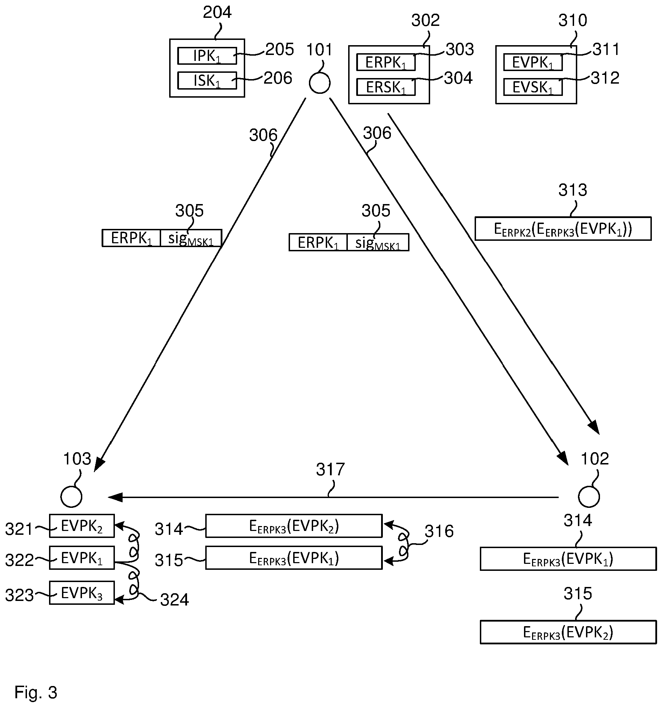

The algorithm for round 1 (also referred to as a single oblivious shuffle) is as follows. Fig. 3 illustrates an example where the only messages from the first node 101 are shown for clarity.
1) Take a group of N nodes (G1) from a pool of valid nodes(these nodes can be a group of 10 nodes all online at the same time and operated by respective voters, for example). Again, valid voters may be represented by public keys that are signed by the trusted authority 207 and presented to the node. At this stage, each voter is associated with one node as described with reference to Fig. 2.
2) Each voter has a main key pair 204 consisting of a main public key (MPK) 205 and main secret key (MSK) 206 which is their primary identity and makes these keys usable by the associated node, such as by inserting a smart card into the node device.
3) Each member of G1 (that is the node operated by the selected voter) then generates an ephemeral round keypair (ERKP) 302 comprising of an ephemeral round public key 303 and secret key 304(ERPK and ERSK respectively). The node then signs the ERPK 305 with the MPK and distribute 306 this to all other nodes of the group.
4) At this point there are N ERPKs associated with voters, that is, associated with MPKs of voters via the corresponding signatures.
5) Each node then generates an ephemeral voting keypair 310 consisting of an ephemeral voting public key (EVPK) 311 and secret key (EVSK) 312. The nodes keep this secret from the other nodes.
6) The nodes sort themselves by any agreed upon method (such as highest-to-lowest ERPK) and begins an oblivious shuffle as follows:
7) The first node 101:
   a) takes its EVPK and encrypts 313 it in layers corresponding to the order of the group. In Fig. 3 encryption is indicated by 'E' where the subscript denotes the public key and the number in the public key denotes the node.
   b) encrypt first with the ERPK held by the Nth node,
   c) then with the ERPK held by the Nth-1 node,
   d) then with the ERPK held by the Nth-2 node, etc,
   e) continuing until it finally encrypts with the ERPK held by the 2^{nd} node.
8) The node then passes this encrypted blob 313 to the 2nd node.
9) The second node then decrypts 314 the outer layer using their ERSK and performs similar actions:
   a) The node takes its EVPK and encrypts 315 it with the Nth ERPK, then the Nth-1 ERPK, etc, down to the 3rd ERPK
   b) The node then shuffles 316 the two blobs they have in any manner, such as by randomly changing the order, and passes 317 both 314 and 315 to the 3rd node.
10) The 3rd node thus has two encrypted blobs.
   While Fig. 3 only shows three nodes, the above process proceeds:
11) The Kth node takes K-1 encrypted blobs from the K-1th node
12) Each blob has layered encryption: K(K+1(K+2(...(N-1(N))...)))
13) The node decrypts all blobs such that its encryption wrapping now corresponds to the ERPKs of voters: K+1(K+2(...(N-1(N))...))
14) The Kth node encrypts its EVPK with the ERPKs corresponding to this layout: K+1(K+2(...(N-1(N))...))
15) The node then shuffles these blobs and passes them to the K+1th node
16) Once the Nth node 103 has received the N-1 blobs 314, 315 from all other nodes, it performs a final decryption, resulting in the N-1 EVPKs 321, 322 corresponding to the other N-1 voters. The node then adds in their EVPK 323, performs a final shuffle 324 and publishes the result to the group.
17) Each node can then inspect the result and verify their EVPK was included. Each node publishes a acknowledge or reject on the result, and if there are any negative responses the algorithm proceeds to the `blame game' stage.

In short, the `blame game' involves every node publishing the complete collection of messages they have sent and received, as well as their ERSK, which allows the location of the mistake to be deduced. At the end of the blame game either some voter refused to publish their messages and ERSK (and thus they were probably the attacker) or the point of attack can be found. Either way, a member of the group can be identified and excluded. More information can be found in CoinShuffle: https://crypsys.mmci.uni-saarland.de/projects/CoinShuffle/coinshuffle.pdf.

### Properties:

Time complexity: O(n)
Space complexity: O(n) for each node
Message complexity: O(n) per node for shuffle - O(n^2) total

### Shuffle Method: MixNet

In a second example, the nodes perform another method using a MixNet or onion routing. That is, the nodes anonymise packets by wrapping them in encryption layers (e.g. A(B(C(msg))) where A, B, and C are public keys).

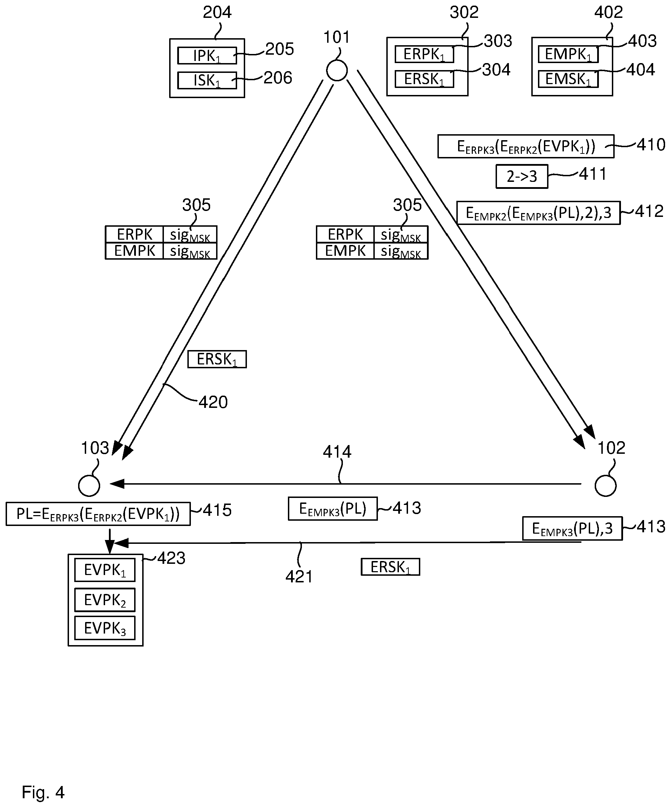

The shuffle algorithm proceeds as follows:
1) There are N nodes (i.e. N voters).
2) All nodes make direct connections to one another and send their MPK and sign (using their MSK) an ERPK 303 and an ephemeral mixing public key (EMPK) 403.
3) Every node now has a list of all nodes and their associated MPK, EMPK, and ERPK
4) Nodes now sort the ERPKs numerically
5) Each node takes their data to be shuffled (vote, EVPK or otherwise) and encrypts it successively with all ERPKs (from smallest to largest) - this is the main payload 410.
6) Then, for *each* node (including themselves)
   a) Each node then selects a *circuit* 411 (or list of EMPKs) of size c (e.g. 5). It is noted that Fig. 4 shows only one circuit for clarity purposes but node 101 selects a second circuit ending at node 102 (3->2). In examples with more than three nodes, each node creates a circuit to each other node including itself. So for four nodes, these may be 2->4->3->1, 3->4->2, 4->2->3 and 3->2->4. While there are many different potential circuits that lead to any one node, only one is selected or generated randomly. In other words, selecting the circuit generates a random order. So for the example of four nodes, the circuit 3->4->2 is selected to lead to '2' but other circuits, such as 4->3->2 can equally be selected.
   b) The node then encrypts its main payload in reverse order with the circuit list of EMPKs and includes the identity of the *next* EMPK according to the circuit each time (for routing purposes)- this is referred to as the circuit encrypted main payload (CEMP) 412. As a result, the voting public keys are encrypted according to the random order as defined by the circuit.
   c) The node then sends its CEMP 412 to the first node in the circuit, which unwraps the outer layer 413 and sends 414 the CEMP to the next node in the circuit. Nodes continue to receive, unwrap, and send the CEMP.
   d) In this way, every circuit node knows the next and previous nodes in the circuit but does not know the destination or the origin.
   e) When the final node 103 receives the CEMP 413it performs the last decryption to obtain the plaintext main payload 415 (which is encrypted with all ERPKs, sorted)
7) Since each node creates a circuit that ends at each other node (multiple random orders), at this point all nodes should have a list of every main payload (wrapped with N layers of encryption made of all the ERPKs), but they do not know who owns which payload, that is, the association between the MPKs and the encrypted payloads is removed.
8) Then, each node publishes the secret key for their ERPK to all other nodes (420 and 421).
9) Every node now has N ERSKs (ephemeral round secret key) for all nodes
10) They can then successively decrypt each layer for every main payload 423 from all other nodes
11) Each node now has N payloads, fully decrypted to plaintext, but cannot tell which came from who, that is, the association between the MPKs and the decrypted payloads is removed, which also means that the association between the MPKs and EMPKs is removed. It is noted that Fig. 4 only shows the protocol for EVPK₁ but it is to be understood that the second node 102 also sends its EVPK to the third node 103, such that the third node 103 has both EVPKs as described above. The node then creates a container 423, such as a list, to include the EVPKs.
12) Each node ensures their contribution is in the list (which should be the case during normal operation because each node creates one circuit that leads to itself)), signs the list with their MPK (round 1) or EVPK (round 2), and publishes their signature to each other node.
13) Each node now has N signatures, all should validate against the MPKs which were sent at the beginning of the round.
14) The anonymized list can now be published.

By using this shuffle, the nodes can again create an anonymized list. Simply to differentiate from the oblivious shuffle the current disclosure refers to this method as the mix shuffle.

### Properties:

Time complexity: O(1) (takes c+3 messages, where c is the length of the circuit)
Space complexity: O(n) per node
Message complexity: O(n) per node

### Voting Shuffle itself

The methods described above can be used to remove associations between arbitrary data packets and the MKPs. As such, the methods described above can be used for exchanging public keys as well as for exchanging votes. In particular, the above methods can be used in a first round to exchange public keys anonymously (i.e. association with the MPK removed) and then in a second round to exchange votes anonymously (i.e. association with the MPK removed).

The two stages can be characterised as follows:
1) Select N nodes from a pool of nodes that have not participated in round 1.
2) Perform an oblivious or mix shuffle as described above using their MPK as authentication between them on Ephemeral Voting Public Keys (this is round 1).
3) Publish the final result to a blockchain or other non-authority-based, immutable data source.
4) Select M nodes from a pool of nodes who have completed round 1.
5) Perform an oblivious or mix shuffle using their EVPK as authentication between them on serialized votes.
6) Publish the final result to a blockchain.

It is noted that any combination of oblivious shuffle or mix shuffle can be used for the two rounds. Votes can be serialized in any format, and this algorithm is agnostic to the particular type of vote or method of serialization as it operates on raw bytes. Serialization is the process of taking structured data and storing it in bytes. The methods disclosed herein are agnostic to the method of serialization.

The pool of N voters in round 1 can be identical to the pool of M voters for round 1, but is not required to be. Using different sets makes it even more difficult for an attacker to recreate the removed associations using traffic analysis, for example.

Additionally, this algorithm is agnostic to the method of oblivious shuffle too, as demonstrated using both the oblivious shuffle and mix shuffle above.

### Advantages

The Voting Shuffle is a fast, efficient, and highly scalable algorithm to produce anonymised votes. This means that it can - for example - be used in developing democracies as part of a full voting solution to guarantee the integrity of an election for *an order of magnitude or greater* reduction in cost compared to paper voting. This significantly lowers the barriers to democratic integrity.

Additionally, all communication can happen in the background after a voter has input the required data, allowing for progressive updates and a short and elegant user experience.

Further, the peer-to-peer architecture has the advantage that there is no central authority that can be attacked to compromise a ballot or election. Significant effort can be invested into the distribution and protection of the identity keys, such as smart cards, personal pick-up, identity checks. Based on this infrastructure, the proposed voting solution is relatively light weight and accessible.

### Applications

It is noted that the nodes may use the above methods selectively. That is, the nodes may automatically select between oblivious shuffle and mixnet. For example, the nodes may switch between the two protocols based on the number of nodes, such as below 10 nodes use oblivious shuffle and for 10 or above use mixnet.

After the votes are approved by the nodes and stored on the distributed ledger or blockchain, the votes can be counted for each group of nodes. For example, for a population of 300 million, there may be 3 million groups of nodes with 100 nodes in each group. As a result, there are 3 million transactions on the distributed ledger, such as Bitcoin and every voter can verify that their vote is included. Further, the votes can be counted by any computer of the public. Each group of nodes may be spread across the country or across an electorate. As soon as a further group of nodes has finished the process, the count of votes can be updated to generate a real-time counting of cast votes.

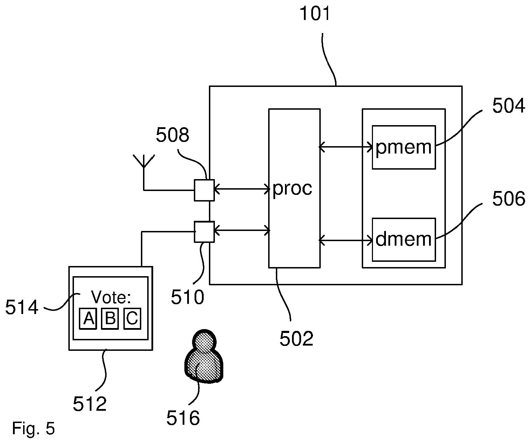

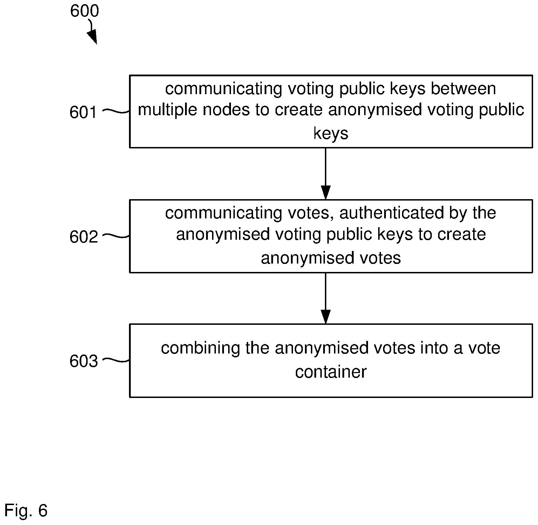

Fig. 5 illustrates a node computer device 101 in more detail. The computer device 101 comprises a processor 502 connected to a program memory 504, a data memory 506, a communication port 508 and a user port 510. The program memory 504 is a non-transitory computer readable medium, such as a hard drive, a solid state disk or CD-ROM. Software, that is, an executable program stored on program memory 504 causes the processor 502 to perform the method in Fig. 6, that is, processor 502 communicates voting public keys between the other nodes by using cryptography to remove an association between the voting public keys and the identity public keys to create a list of anonymised voting public keys. After the association between the voting public keys and the identity public keys is removed, processor 502 communicates votes, authenticated by the anonymised voting public keys to create anonymised votes as described above and combines the anonymised votes into a vote container.

The processor 502 may store the votes and keys on data store 506, such as on RAM or a processor register. Processor 502 may also send the votes and keys via communication port 508 to a server, or to the blockchain as transactions.

The processor 502 may receive data, such as votes or keys, from data memory 506 as well as from the communications port 508 and the user port 510, which is connected to a display 512 that shows a visual representation 514 of a voting interface to a voter 516. In one example, the processor 502 receives votes or keys from other nodes via communications port 508, such as by using a Wi-Fi network according to IEEE 802.11. The Wi-Fi network may be a decentralised ad-hoc network, such that no dedicated management infrastructure, such as a router, is required or a centralised network with a router or access point managing the network.

Although communications port 508 and user port 510 are shown as distinct entities, it is to be understood that any kind of data port may be used to receive data, such as a network connection, a memory interface, a pin of the chip package of processor 502, or logical ports, such as IP sockets or parameters of functions stored on program memory 504 and executed by processor 502. These parameters may be stored on data memory 506 and may be handled by-value or by-reference, that is, as a pointer, in the source code.

The processor 502 may receive data through all these interfaces, which includes memory access of volatile memory, such as cache or RAM, or non-volatile memory, such as an optical disk drive, hard disk drive, storage server or cloud storage. The computer system 500 may further be implemented within a cloud computing environment, such as a managed group of interconnected servers hosting a dynamic number of virtual machines.

It is to be understood that any receiving step may be preceded by the processor 502 determining or computing the data that is later received. For example, the processor 502 decrypts a vote or key and stores the decrypted vote or key in data memory 506, such as RAM or a processor register. The processor 502 then requests the data from the data memory 506, such as by providing a read signal together with a memory address. The data memory 506 provides the data as a voltage signal on a physical bit line and the processor 502 receives the decrypted vote or key via a memory interface.

It is to be understood that throughout this disclosure unless stated otherwise, nodes, edges, graphs, solutions, variables, votes, keys, blobs and the like refer to data structures, which are physically stored on data memory 506 or processed by processor 502. Further, for the sake of brevity when reference is made to particular variable names, such as "period of time" or "identifier" this is to be understood to refer to values of variables stored as physical data in computer system 500.

Fig. 6 illustrates a method 600 as performed by processor 502 for collecting votes. Fig. 6 is to be understood as a blueprint for the software program and may be implemented step-by-step, such that each step in Fig. 6 is represented by a function in a programming language, such as C++ or Java. The resulting source code is then compiled and stored as computer executable instructions on program memory 504.

As above, the voters are associated with multiple identity public keys that each identify one voter. The method commences by communicating 601 voting public keys between multiple nodes. Each node uses cryptography to remove an association between the voting public keys and the identity public keys to create a list of anonymised voting public keys. After the association between the voting public keys and the identity public keys is removed, each node communicates 602 votes, authenticated by the anonymised voting public keys to create anonymised votes. Finally, each node combines 603 the anonymised votes into a vote container.

It is noted that for most humans performing the method 200 manually, that is, without the help of a computer, would be practically impossible. Therefore, the use of a computer is part of the substance of the invention and allows performing the necessary calculations that would otherwise not be possible due to the large amount of data and the large number of calculations that are involved.

It will be appreciated by persons skilled in the art that numerous variations and/or modifications may be made to the specific embodiments without departing from the scope as defined in the claims.

It should be understood that the techniques of the present disclosure might be implemented using a variety of technologies. For example, the methods described herein may be implemented by a series of computer executable instructions residing on a suitable computer readable medium. Suitable computer readable media may include volatile (e.g. RAM) and/or non-volatile (e.g. ROM, disk) memory, carrier waves and transmission media. Exemplary carrier waves may take the form of electrical, electromagnetic or optical signals conveying digital data steams along a local network or a publically accessible network such as the internet.

It should also be understood that, unless specifically stated otherwise as apparent from the following discussion, it is appreciated that throughout the description, discussions utilizing terms such as "estimating" or "processing" or "computing" or "calculating" or "optimizing" or "determining" or "displaying" or "maximising" or "sorting" or the like, refer to the action and processes of a computer system, or similar electronic computing device, that processes and transforms data represented as physical (electronic) quantities within the computer system's registers and memories into other data similarly represented as physical quantities within the computer system memories or registers or other such information storage, transmission or display devices.

The present embodiments are, therefore, to be considered in all respects as illustrative and not restrictive.

## Claims

1. A voting system (100) for collecting votes from multiple voters (201, 202, 203), the voters being associated with multiple identity public keys (205) that each identify one voter, the voting system comprising:
multiple node computer devices (101, 102, 103) configured to collect the votes and to combine the votes into a vote container (423) and to store the vote container including the votes on a public data store, **characterised in that**
the multiple node computer devices are further configured to generate voting public keys, wherein there is an association between voting public keys (311) and the identity public keys via corresponding signatures,
each of the multiple node computer devices is further configured to communicate the voting public keys between the node computer devices by using cryptography to remove the association between the voting public keys and the identity public keys to create a list of anonymised voting public keys,
each of the multiple node computer devices is further configured, after the association between the voting public keys and the identity public keys is removed, to communicate votes, authenticated by the anonymised voting public keys, by using cryptography to remove an association between the votes and the voting public keys to create anonymised votes and combine the anonymised votes into the vote container.

2. The voting system of claim 1, wherein each of the multiple node computer devices is further configured to store an identity key pair including the identity public key and an identity private key (206) and to sign the voting public key using the identity private key of that node computer device.

3. The voting system of any one of the preceding claims, wherein the voting public keys are ephemeral.

4. The voting system of any one of the preceding claims, wherein using cryptography to remove the association between the voting public keys and the identity public keys comprises encrypting multiple voting public keys according to a random order and sending the randomly sorted voting public keys to the other node computer devices.

5. The voting system of any one of the preceding claims, wherein using cryptography to remove the association between the voting public keys and the identity public keys comprises receiving a first data packet that is encrypted multiple times with different voting public keys, decrypting the first data packet once and sending the decrypted first data packet to a next node computing device.

6. The voting system of claim 5, wherein using cryptography to remove the association between the voting public keys and the identity public keys further comprises:
receiving multiple data packets that are encrypted multiple times with different voting public keys;
decrypting the multiple data packets once;
randomly ordering the multiple data packets; and
sending the decrypted randomly ordered multiple data packets to a next node computing device.

7. The voting system of claim 6, wherein using cryptography to remove the association between the voting public keys and the identity public keys further comprises, before the step of randomly ordering the multiple data packets, creating a new data packet, encrypting the new data packet multiple times with different voting public keys and adding the encrypted new data packet to the multiple data packets.

8. The voting system of any one of the preceding claims, wherein using cryptography to remove the association between the voting public keys and the identity public keys further comprises:
creating a random order of node computer devices;
encrypting a data packet multiple times using voting public keys in the order of the node computer devices; and
sending the encrypted data packet together with an indication of the order of node computer devices to a next node computer device as indicated by the order of node computer devices.

9. The voting system of claim 8, wherein using cryptography to remove the association between the voting public keys and the identity public keys further comprises:
creating multiple random orders of node computer devices by creating a random order for each of the multiple node computer devices such that the random order ends at that node computer device;
for each of the multiple random orders encrypting a data packet multiple times using voting public keys in that order of the node computer devices; and
sending each of the encrypted data packets together with an indication of that order of node computer devices to a next node computer device as indicated by that order of node computer devices.

10. The voting system of any one of the preceding claims, wherein storing the vote container on a public data store comprises storing the vote container on a distributed ledger of transactions.

11. The voting system of any one of the preceding claims, wherein the multiple node computer devices are further configured to store the list of anonymised voting public keys on a distributed ledger.

12. The voting system of any one of the preceding claims, wherein the multiple node computer devices are further configured to determine whether their associated public key is included in the list of anonymised voting public keys and upon determining that their associated public key is included, calculating a cryptographic signature of the list of anonymised voting public keys.

13. The voting system of any one of the preceding claims, wherein each of the votes includes a vote identifier and the multiple node computer devices are further configured to determine whether their vote identifier is included in the collected votes and upon determining that their vote identifier is included, calculating a cryptographic signature of the collected votes.

14. The voting system of any one of the preceding claims, wherein the multiple node computer devices are further configured to remove the association between the voting public keys and the identity public keys selectively by using a first protocol according to one of claims 6 and 7 or by using a second protocol according to one of claims 8 and 9, wherein optionally, the multiple node computer devices are further configured to select between the first protocol and the second protocol based on the number of node computer devices.

15. A method (600) comprising the following steps performed by multiple node computer devices (101, 102, 103) of a voting system:
collecting votes from multiple voters (201, 202, 203), the voters being associated with multiple identity public keys (205) that each identify one voter, **characterised in that** the method further comprises:
generating voting public keys, wherein there is an association between the voting public keys (311) and the identity public keys via corresponding signatures,
communicating voting public keys (311) between the multiple node computer devices (101, 102, 103) by using cryptography to remove the association between the voting public keys and the identity public keys to create a list of anonymised voting public keys,
after the association between the voting public keys and the identity public keys is removed, communicating votes, authenticated by the anonymised voting public keys, by using cryptography to remove an association between the votes and the voting public keys to create anonymised votes; and
combining the anonymised votes into a vote container.

## Patentansprüche

1. Abstimmungssystem (100) zum Sammeln von Stimmen von mehreren Wählern (201, 202, 203), wobei die Wähler mehreren öffentlichen Identitätsschlüsseln (205) zugeordnet sind, die jeweils einen Wähler identifizieren, mit:
mehrere Knotencomputervorrichtungen (101, 102, 103), die zum Sammeln der Stimmen und zum Kombinieren der Stimmen in einen Stimmencontainer (423) und zum Speichern des Stimmencontainers mit den Stimmen auf einem öffentlichen Datenspeicher ausgebildet sind, **dadurch gekennzeichnet, dass**
die mehreren Knotencomputervorrichtungen ferner zum Erzeugen von öffentlichen Abstimmungsschlüsseln ausgebildet sind, wobei eine Zuordnung zwischen den öffentlichen Abstimmungsschlüsseln (311) und den öffentlichen Identitätsschlüsseln über entsprechende Signaturen vorhanden ist,
jede der mehreren Knotencomputervorrichtungen ferner zum Kommunizieren der öffentlichen Abstimmungsschlüssel zwischen den Knotencomputervorrichtungen unter Verwendung von Kryptographie zum Entfernen der Zuordnung zwischen den öffentlichen Abstimmungsschlüsseln und den öffentlichen Identitätsschlüsseln zum Erzeugen einer Liste von anonymisierten öffentlichen Abstimmungsschlüsseln ausgebildet ist,
jede der mehreren Knotencomputervorrichtungen ferner dazu ausgebildet ist, nach Entfernen der Zuordnung zwischen den öffentlichen Abstimmungsschlüsseln und den öffentlichen Identitätsschlüsseln, Stimmen, die durch die anonymisierten öffentlichen Abstimmungsschlüssel authentifiziert sind, unter Verwendung von Kryptographie zum Entfernen einer Zuordnung zwischen den Stimmen und den öffentlichen Abstimmungsschlüsseln zum Erzeugen von anonymisierten Stimmen zu kommunizieren und die anonymisierten Stimmen in den Stimmencontainer zu kombinieren.

2. Abstimmungssystem nach Anspruch 1, bei dem jede der mehreren Knotencomputervorrichtungen ferner zum Speichern eines Identitätsschlüsselpaars mit dem öffentlichen Identitätsschlüssel und einem privaten Identitätsschlüssel (206) und zum Signieren des öffentlichen Abstimmungsschlüssels unter Verwendung des privaten Identitätsschlüssels dieser Knotencomputervorrichtung ausgebildet ist.

3. Abstimmungssystem nach einem der vorhergehenden Ansprüche, bei dem die öffentlichen Abstimmungsschlüssel ephemerisch sind.

4. Abstimmungssystem nach einem der vorhergehenden Ansprüche, bei dem die Verwendung von Kryptographie zum Entfernen der Zuordnung zwischen den öffentlichen Abstimmungsschlüsseln und den öffentlichen Identitätsschlüsseln Verschlüsseln mehrerer öffentlicher Abstimmungsschlüssel gemäß einer zufälligen Reihenfolge und Senden der zufällig sortierten öffentlichen Abstimmungsschlüssel zu den anderen Knotencomputervorrichtungen beinhaltet.

5. Abstimmungssystem nach einem der vorhergehenden Ansprüche, bei dem die Verwendung von Kryptographie zum Entfernen der Zuordnung zwischen den öffentlichen Abstimmungsschlüsseln und den öffentlichen Identitätsschlüsseln Empfangen eines ersten Datenpakets, das mehrere Male mit unterschiedlichen öffentlichen Abstimmungsschlüsseln verschlüsselt ist, einmaliges Entschlüsseln des ersten Datenpakets und Senden des entschlüsselten ersten Datenpakets zu einer nächsten Knotencomputervorrichtung beinhaltet.

6. Abstimmungssystem nach Anspruch 5, bei dem die Verwendung von Kryptographie zum Entfernen der Zuordnung zwischen den öffentlichen Abstimmungsschlüsseln und den öffentlichen Identitätsschlüsseln ferner beinhaltet:
Empfangen von mehreren Datenpaketen, die mehrere Male mit unterschiedlichen öffentlichen Abstimmungsschlüsseln verschlüsselt sind;
einmaliges Entschlüsseln der mehreren Datenpakete;
zufällig Ordnen der mehreren Datenpakete; und
Senden der entschlüsselten zufällig geordneten mehreren Datenpakete zu einer nächsten Knotencomputervorrichtung.

7. Abstimmungssystem nach Anspruch 6, bei dem die Verwendung von Kryptographie zum Entfernen der Zuordnung zwischen den öffentlichen Abstimmungsschlüsseln und den öffentlichen Identitätsschlüsseln ferner, vor dem Schritt zum zufällig Ordnen der mehreren Datenpakete, Erzeugen eines neuen Datenpakets, mehrmaliges Verschlüsseln des neuen Datenpakets mit unterschiedlichen öffentlichen Abstimmungsschlüsseln und Hinzufügen des verschlüsselten neuen Datenpakets zu den mehreren Datenpaketen beinhaltet.

8. Abstimmungssystem nach einem der vorhergehenden Ansprüche, bei dem die Verwendung von Kryptographie zum Entfernen der Zuordnung zwischen den öffentlichen Abstimmungsschlüsseln und den öffentlichen Identitätsschlüsseln ferner beinhaltet:
Erzeugen einer zufälligen Reihenfolge von Knotencomputervorrichtungen;
mehrmaliges Verschlüsseln eines Datenpakets unter Verwendung von öffentlichen Abstimmungsschlüsseln in der Reihenfolge der Knotencomputervorrichtungen; und
Senden des verschlüsselten Datenpakets zusammen mit einer Angabe der Reihenfolge der Knotencomputervorrichtungen zu einer nächsten Knotencomputervorrichtung wie durch die Reihenfolge der Knotencomputervorrichtungen angegeben.

9. Abstimmungssystem nach Anspruch 8, bei dem die Verwendung von Kryptographie zum Entfernen der Zuordnung zwischen den öffentlichen Abstimmungsschlüsseln und den öffentlichen Identitätsschlüsseln ferner beinhaltet:
Erzeugen mehrerer zufälliger Reihenfolgen von Knotencomputervorrichtungen durch Erzeugen einer zufälligen Reihenfolge für jede der mehreren Knotencomputervorrichtungen derart, dass die zufällige Reihenfolge bei dieser Knotencomputervorrichtung endet;
für jede der mehreren zufälligen Reihenfolgen, mehrmaliges Verschlüsseln eines Datenpakets unter Verwendung von öffentlichen Abstimmungsschlüsseln in dieser Reihenfolge der Knotencomputervorrichtungen; und
Senden jedes der verschlüsselten Datenpakete zusammen mit einer Angabe dieser Reihenfolgen von Knotencomputervorrichtungen zu einer nächsten Knotencomputervorrichtung wie durch diese Reihenfolge von Knotencomputervorrichtungen angegeben.

10. Abstimmungssystem nach einem der vorhergehenden Ansprüche, bei dem das Speichern des Stimmencontainers auf einem öffentlichen Datenspeicher Speichern des Stimmencontainers auf einem verteilten Verzeichnis von Transaktionen beinhaltet.

11. Abstimmungssystem nach einem der vorhergehenden Ansprüche, bei dem die mehreren Knotencomputervorrichtungen ferner zum Speichern der Liste von anonymisierten öffentlichen Abstimmungsschlüsseln auf einem verteilten Verzeichnis ausgebildet sind.

12. Abstimmungssystem nach einem der vorhergehenden Ansprüche, bei dem die mehreren Knotencomputervorrichtungen ferner dazu ausgebildet sind, zu bestimmen, ob ihr zugeordneter öffentlicher Schlüssel in der Liste von anonymisierten öffentlichen Abstimmungsschlüsseln enthalten ist, und bei einer Bestimmung, dass ihr zugeordneter öffentlicher Schlüssel enthalten ist, eine kryptographische Signatur der Listen von anonymisierten öffentlichen Abstimmungsschlüsseln zu berechnen.

13. Abstimmungssystem nach einem der vorhergehenden Ansprüche, bei dem jede der Stimmen einen Stimmenidentifizierer aufweist und die mehreren Knotencomputervorrichtungen ferner dazu ausgebildet sind, zu bestimmen, ob ihr Stimmenidentifizierer in den gesammelten Stimmen enthalten ist, und bei einer Bestimmung, dass ihr Stimmenidentifizierer enthalten ist, eine kryptographische Signatur der gesammelten Stimmen zu berechnen.

14. Abstimmungssystem nach einem der vorhergehenden Ansprüche, bei dem die mehreren Knotencomputervorrichtungen ferner dazu ausgebildet sind, die Zuordnung zwischen den öffentlichen Abstimmungsschlüsseln und den öffentlichen Identitätsschlüsseln selektiv zu entfernen, unter Verwendung eines ersten Protokolls nach einem der Ansprüche 6 und 7 oder unter Verwendung eines zweiten Protokolls nach einem der Ansprüche 8 und 9, wobei optional die mehreren Knotencomputervorrichtungen ferner dazu ausgebildet sind, basierend auf der Anzahl von Knotencomputervorrichtungen zwischen dem ersten Protokoll und dem zweiten Protokoll auszuwählen.

15. Verfahren (600) mit den folgenden Schritten, die durch mehrere Knotencomputervorrichtungen (101, 102, 103) eines Abstimmungssystems durchgeführt werden:
Sammeln von Stimmen von mehreren Wählern (201, 202, 203), wobei die Wähler mehreren öffentlichen Identitätsschlüsseln (205) zugeordnet sind, die jeweils einen Wähler identifizieren, **dadurch gekennzeichnet, dass** das Verfahren ferner aufweist:
Erzeugen von öffentlichen Abstimmungsschlüsseln, wobei eine Zuordnung zwischen den öffentlichen Abstimmungsschlüsseln (311) und den öffentlichen Identitätsschlüsseln über entsprechende Signaturen vorhanden ist,
Kommunizieren von öffentlichen Abstimmungsschlüsseln (311) zwischen den mehreren Knotencomputervorrichtungen (101, 102, 103) unter Verwendung von Kryptographie zum Entfernen der Zuordnung zwischen den öffentlichen Abstimmungsschlüsseln und den öffentlichen Identitätsschlüsseln zum Erzeugen einer Liste von anonymisierten öffentlichen Abstimmungsschlüsseln,
nach Entfernen der Zuordnung zwischen den öffentlichen Abstimmungsschlüsseln und den öffentlichen Identitätsschlüsseln, Kommunizieren von Stimmen, authentifiziert durch die anonymisierten öffentlichen Abstimmungsschlüssel, unter Verwendung von Kryptographie zum Entfernen einer Zuordnung zwischen den Stimmen und den öffentlichen Abstimmungsschlüsseln zum Erzeugen von anonymisierten Stimmen; und
Kombinieren der anonymisierten Stimmen in einen Stimmencontainer.

## Revendications

1. Système de vote (100) pour recueillir les votes de plusieurs électeurs (201, 202, 203), les électeurs étant associés à plusieurs clés publiques d'identité (205) qui identifient chacune un électeur, le système de vote comprenant :
de multiples dispositifs informatiques nodaux (101, 102, 103) configurés pour collecter les votes et les combiner dans un conteneur de votes (423) et stocker le conteneur de votes comprenant les votes sur un magasin de données public, **caractérisé en ce que**
les multiples dispositifs informatiques nodaux sont en outre configurés pour générer des clés publiques de vote, dans lequel il existe une association entre les clés publiques de vote (311) et les clés publiques d'identité par le biais de signatures correspondantes,
chacun des multiples dispositifs informatiques nodaux est en outre configuré pour communiquer les clés publiques de vote entre les dispositifs informatiques à noeuds en utilisant la cryptographie pour supprimer l'association entre les clés publiques de vote et les clés publiques d'identité afin de créer une liste de clés publiques de vote anonymisées,
chacun des multiples dispositifs informatiques nodaux est en outre configuré, après la suppression de l'association entre les clés publiques de vote et les clés publiques d'identité, pour communiquer les votes, authentifiés par les clés publiques de vote anonymisées, en utilisant la cryptographie pour supprimer l'association entre les votes et les clés publiques de vote afin de créer des votes anonymisés et de combiner les votes anonymisés dans le conteneur de votes.

2. Système de vote selon la revendication 1, dans lequel chacun des multiples dispositifs informatiques nodaux est en outre configuré pour stocker une paire de clés d'identité comprenant la clé publique d'identité et une clé privée d'identité (206) et pour signer la clé publique de vote à l'aide de la clé privée d'identité de ce dispositif informatique nodal.

3. Système de vote selon l'une quelconque des revendications précédentes, dans lequel les clés publiques
de vote sont éphémères.

4. Système de vote selon l'une quelconque des revendications précédentes, dans lequel l'utilisation de la cryptographie pour supprimer l'association entre les clés publiques de vote et les clés publiques d'identité consiste à crypter plusieurs clés publiques de vote dans un ordre aléatoire et à envoyer les clés publiques de vote triées de manière aléatoire aux autres dispositifs informatiques nodaux.

5. Système de vote selon l'une quelconque des revendications précédentes, dans lequel l'utilisation de la cryptographie pour supprimer l'association entre les clés publiques de vote et les clés publiques d'identité comprend la réception d'un premier paquet de données qui est crypté plusieurs fois avec différentes clés publiques de vote, le décryptage du premier paquet de données une fois et l'envoi du premier paquet de données décrypté à un dispositif informatique nodal suivant.

6. Système de vote selon la revendication 5, dans lequel l'utilisation de la cryptographie pour supprimer l'association entre les clés publiques de vote et les clés publiques d'identité comprend en outre :
la réception de multiples paquets de données qui sont cryptés plusieurs fois avec différentes clés publiques de vote ;
le décryptage des multiples paquets de données une seule fois ;
la mise en ordre de manière aléatoire des multiples paquets de données ; et
l'envoi des multiples paquets de données décryptés et ordonnés de manière aléatoire à un dispositif informatique nodal suivant.

7. Système de vote selon la revendication 6, dans lequel l'utilisation de la cryptographie pour supprimer l'association entre les clés publiques de vote et les clés publiques d'identité comprend en outre, avant l'étape de mise en ordre de manière aléatoire des multiples paquets de données, la création d'un nouveau paquet de données, le cryptage du nouveau paquet de données plusieurs fois avec des clés publiques de vote différentes et l'ajout du nouveau paquet de données crypté aux multiples paquets de données.

8. Système de vote selon l'une quelconque des revendications précédentes, dans lequel l'utilisation de la cryptographie pour supprimer l'association entre les clés publiques de vote et les clés publiques d'identité comprend en outre :
la création d'un ordre aléatoire de dispositifs informatiques nodaux ;
le cryptage d'un paquet de données plusieurs fois à l'aide de clés publiques de vote dans l'ordre des dispositifs informatiques nodaux ; et l'envoi du paquet de données crypté avec une indication de l'ordre des dispositifs informatiques nodaux à un dispositif informatique nodal suivant, comme indiqué par l'ordre des dispositifs informatiques nodaux.

9. Système de vote selon la revendication 8, dans lequel l'utilisation de la cryptographie pour supprimer l'association entre les clés publiques de vote et les clés publiques d'identité comprend en outre :
la création de multiples ordres aléatoires de dispositifs informatiques nodaux en créant un ordre aléatoire pour chacun des multiples dispositifs informatiques nodaux de sorte que l'ordre aléatoire se termine à ce dispositif informatique nodal ;
pour chacun des multiples ordres aléatoires, le cryptage d'un paquet de données plusieurs fois à l'aide des clés publiques de vote dans cet ordre des dispositifs informatiques nodaux ; et
l'envoi de chacun des paquets de données crypté avec une indication de cet ordre des dispositifs informatiques nodaux à un dispositif informatique nodal suivant, comme indiqué par cet ordre des dispositifs informatiques nodaux.

10. Système de vote selon l'une quelconque des revendications précédentes, dans lequel le stockage du conteneur de votes sur un magasin de données public comprend le stockage du conteneur de votes sur un registre distribué de transactions.

11. Système de vote selon l'une quelconque des revendications précédentes, dans lequel les multiples dispositifs informatiques nodaux sont en outre configurés pour stocker la liste des clés publiques de vote anonymisées sur un registre distribué.

12. Système de vote selon l'une quelconque des revendications précédentes, dans lequel les multiples dispositifs informatiques nodaux sont en outre configurés pour déterminer si leur clé publique associée est incluse dans la liste des clés publiques de vote anonymisées et, après avoir déterminé que leur clé publique associée est incluse, pour calculer une signature cryptographique de la liste des clés publiques de vote anonymisées.

13. Système de vote selon l'une quelconque des revendications précédentes, dans lequel chacun des votes comprend un identifiant de vote et les multiples dispositifs informatiques nodaux sont en outre configurés pour déterminer si leur identifiant de vote est inclus dans les votes collectés et, après avoir déterminé que leur identifiant de vote est inclus, pour calculer une signature cryptographique des votes collectés.

14. Système de vote selon l'une quelconque des revendications précédentes, dans lequel les multiples dispositifs informatiques nodaux sont en outre configurés pour supprimer l'association entre les clés publiques de vote et les clés publiques d'identité de manière sélective en utilisant un premier protocole selon l'une des revendications 6 et 7 ou en utilisant un second protocole selon l'une des revendications 8 et 9, dans lequel facultativement, les multiples dispositifs informatiques nodaux sont en outre configurés pour choisir entre le premier protocole et le second protocole en fonction du nombre de dispositifs informatiques nodaux.

15. Procédé (600) comprenant les étapes suivantes exécutées par de multiples dispositifs informatiques nodaux (101, 102, 103) d'un système de vote :
le recueillement des votes de plusieurs électeurs (201, 202, 203), les électeurs étant associés à plusieurs clés publiques d'identité (205) qui identifient chacune un électeur, **caractérisé en ce que** le procédé comprend en outre :
la génération de clés publiques de vote, dans lequel il existe une association entre les clés publiques de vote (311) et les clés publiques d'identité par le biais de signatures correspondantes,
la communication des clés publiques de vote (311) entre les multiples dispositifs informatiques nodaux (101, 102, 103) en utilisant la cryptographie pour supprimer l'association entre les clés publiques de vote et les clés publiques d'identité afin de créer une liste de clés publiques de vote anonymisées,
après la suppression de l'association entre les clés publiques de vote et les clés publiques d'identité, la communication des votes, authentifiés par les clés publiques de vote anonymisées, en utilisant la cryptographie pour supprimer l'association entre les votes et les clés publiques de vote afin de créer des votes anonymisés ; et
la combinaison des votes anonymisés dans un conteneur de votes.
